# EUROPEAN PATENT APPLICATION

(11) **EP 1 954 067 A1**
(43) Date of publication of application: **06.08.2008**
(21) Application number: 05816692.7
(22) Date of filing: 14.12.2005
(51) Int. Cl.: H04Q 7/22, H04L 12/56, H04Q 7/28, H04Q 7/38

(54) **COMMUNICATION DEVICE AND HANDOVER METHOD**

(71) Applicant: MATSUSHITA ELECTRIC INDUSTRIAL CO., LTD., Osaka 571-8501 (JP)
(72) Inventor: KANAZAWA, Takeshi Matsushita Electric Industrial Co.,Ltd., 2-1-61,Shiromi, Chuo-ku Osaka 540-6207 (JP); ISHIDA, Hiroshi Matsushita Electric Industrial Co.,Ltd., 2-1-61,Shiromi, Chuo-ku Osaka 540-6207 (JP); KOIDE, Yasuo Matsushita Electric Industrial Co.,Ltd., 2-1-61,Shiromi, Chuo-ku Osaka 540-6207 (JP)
(74) Representative: Grünecker, Kinkeldey, Stockmair & Schwanhäusser Anwaltssozietät
(86) International application number: PCT/JP2005/022981
(87) International publication number: WO 2007/069319

(57) **Abstract**

A communication device can perform handover in accordance with a traffic type. In a non-real time communication, it is possible to prevent loss of packet data. In a real time communication, a handover can be rapidly performed without causing a delay. In this device, a handover control unit (105) judges whether data type information is data in a real time communication. If the data is in a real time communication, the handover control unit (105) outputs a switching request message for switching the path switch to the local station to an IPAG interface unit (104). An L3 packet buffer management unit (106) temporarily accumulates the data transmitted from the IPAG or data transferred from other network host.

## Description

### Technical Field

The present invention relates to a communication apparatus and a handover method. More particularly, the present invention relates to a communication apparatus and a handover method for performing handover according to traffic types.

### Background Art

Network layer protocols supporting the Internet (hereinafter "IP") are used to manage and control data that flows in the form of IP data from a source node to a destination node by accessing network or subnetwork making up the Internet. In order to ensure that IP data packets can be delivered, each node is assigned an IP address and the assigned IP address defines a location on fixed network for the corresponding node. IPs are generally designed to support routing of IP packets among fixed network nodes.

However, with the rapid development of radio nodes, there is a growing demand for providing IP support for mobile terminals in the same way as for fixed nodes . Here, fixed nodes generally do not move. Furthermore, mobile terminals can move within areas matching, for example, subnetwork or local network (LAN) segments. Furthermore, mobile terminals can also change points of accessing subnetwork or LAN segments continuously through different network hosts. Furthermore, as is immediately understood by those skilled in the art, the corresponding network hosts function as a proxy with respect to the mobile terminals.

In order to ensure that data is correctly routed to a mobile terminal and that the continuity is maintained even if the point of connecting the mobile terminal to subnetwork or LAN and IP address change continuously, the mobile terminal registers itself with each network host through connections to the subnetwork or LAN. Through this registration processing, registration records are created and saved in the network host via the connected mobile terminal. In this case, using information including these registered records, the network host can manage or support requests for movement of the mobile terminal, such as receiving IP data packets representing, for example, the mobile terminal, applying processing thereto, and then sending the IP data packets to the mobile terminal. When continuously moving from a certain network host to a new network host, the mobile terminal carries out processing called "handover" whereby the mobile terminal deletes the registration with the old network host and registers the mobile terminal with the new network host. The registration deletion processing includes processing of deleting the above-described registered records from the old network host. The registration deletion processing of the mobile terminal is extremely important. For example, deleting the registration eliminates the necessity for consuming network resources and thereby contributes to security. On the other hand, when the deletion fails, one or more hosts react as a proxy for the mobile terminal, which makes routing and assignment of IP data packets inappropriate and provokes unacceptable malfunction of the network.

Non-Patent Document 1 is known as a conventional method of handover between network hosts. The method of handover between network hosts disclosed in Non-Patent Document 1 will be explained using FIG. 1. FIG. 1 is a sequence diagram showing the conventional handover method.

The mobile terminal (UE) measures received quality of a serving cell and monitored adjacent cells and reports "measurement" showing a radio condition to a source ENB (evolved Node B) (step ST11). Here, the "measurement" is used to prepare and perform handover. Next, the source ENB determines a measuring condition and a preparation threshold. The preparation for handover starts after a preparation trigger. The preparation trigger is generated when the mobile terminal reports that the set preparation threshold is reached. Next, the source ENB transfers a context of the mobile terminal to a target ENB (step ST12) and inquires about whether or not the mobile terminal may perform handover. The context of the mobile terminal is stored in the target ENB. Next, the target ENB reports to an ASGW (Access Gateway) that the mobile terminal is attempting to perform handover to the target ENB (step ST13). Next, when the ASGW allows the mobile terminal to perform handover to the targetENB, the ASGW reports that it allows the handover (step ST14). Next, the target ENB prepares a specific radio configuration and a tunnel of the mobile terminal, returns the prepared radio configuration to the source ENB, and thereby reports that the preparation for handover has been completed (step ST15). Next, the source ENB reports to the mobile terminal that handover is possible (step ST16). Next, the source ENB starts handover processing. Next, the source ENB commands the mobile terminal to perform handover (step ST17). Next, the mobile terminal cuts off the radio connection with the source ENB and starts to make preparations for handover. Furthermore, nearly simultaneously with step ST17, the source ENB reports to the target ENB that the mobile terminal will perform handover and also transfers the remaining packet data that has not been sent to the mobile terminal to the target ENB (step ST18). Next, the mobile terminal establishes a radio connection with the target ENB, performs handover and then starts to transmit uplink packet data to the target ENB (step ST19). After receiving the command of the handover in step ST17, the mobile terminal cuts off the radio connection with the source ENB, and therefore the mobile terminal is connected to none of the source ENB and target ENB until the mobile terminal establishes a radio connection with the target ENB in step ST19, that is, for a period from step ST17 to step ST19, and cannot thereby receive any packet data at all.

Next, the target ENB requests the ASGW to send packet data to the target ENB (step ST20). It is not until ASGW receives the request in step ST20 that the ASGW knows that the mobile terminal has performed handover to the target ENB. The ASGW then releases the resources of the source ENB (step ST21). The mobile terminal periodically transmits "measurement" to the source ENB while the mobile terminal is connected to the source ENB through the radio channel.

In this way, the pro-active type handover disclosed in Non-Patent Document 1 uses a method of making preparation related to handover at the initiative of network to realize higher-speed handover and loss-less handover in advance before performing handover. Furthermore, the pro-active type handover can reduce a handover waiting time. This is very useful for seamless handover and for receiving an optimum service at a cell end. The network-controlled handover is determined by the source ENB and user plane data is temporarily transferred from the source ENB to the target ENB. Execution of handover is completed after path switching of the user plane data at the ASGW and release of the old link.
Non-Patent Document 1 : NTT DoCoMo et al., "Joint proposal to select C-plane architecture option C: Idle state in central node and RRC Connected in Node-B", 3GPP TSG-RAN2&3 Joint Meeting, November 7-11, 2005, Seoul, R2-052919

### Disclosure of Invention

### Problems to be Solved by the Invention

However, when the conventional method realizes so-called "hard handover" by establishing connection with the target ENB after the mobile terminal cuts off the connection with the source ENB, packet data directed to the mobile terminal arrives at the source ENB after the mobile terminal cuts off the connection with the source ENB upon receiving the command in step ST17 until the ASGW comes to know in step ST20 that handover to the target ENB has taken place and path switching is completed. As a result, the source ENB needs to transfer the packet data directed to the mobile terminal received from the ASGW after the connection with the mobile terminal is cut off in step ST17 to the target ENB. Here, in the case of real-time type communication which is strict about delays, packet data should be transferred from the source ENB to the target ENB at high speed to realize higher-speed handover. However, when the processing load of transfer of packet data from the source ENB to the target ENB is excessively large, there is a problem that packet data cannot be transferred at high speed and a delay is produced. Especially when a plurality of users are moving by train or the like, a plurality of mobile terminals perform handover at once, and therefore there is a problem that the load on the ENB further increases and the delay also increases. On the other hand, in the case of non-real-time type communication according to the conventional method, it is important that the mobile terminal be able to receive packet data without loss even if certain delays are produced, and therefore there is no particular inconvenience even with the conventional method.

It is therefore an object of the present invention to provide a communication apparatus and a handover method capable of preventing loss of packet data in non-real-time type communication and performing handover at high speed without producing any delay in real-time type communication by performing handover according to traffic types.

### Means for Solving the Problem

The communication apparatus according to the present invention adopts a configuration including: a data type information acquiring section that acquires, when the communication apparatus is selected as a handover target of a communication terminal apparatus, data type information, which is information of a type of data transmitted to the communication terminal apparatus by another station of a handover source; a switching determining section that determines whether or not to perform path switching for switching the data being transmitted from a higher station to the another station so as to be transmitted from the higher station to the communication apparatus before handover based on the data type information; a switching requesting section that requests, when the switching determining section determines to perform the path switching, the switching from the higher station; a data storing section that temporarily stores the data transmitted from the higher station in response to the request of the switching requesting section; and a transmitting section that transmits the data stored in the data storing section to the communication terminal apparatus after the handover.

Furthermore, the communication apparatus of the present invention adopts a configuration including: a received quality information acquiring section that acquires received quality information, which is information of received quality in a communication terminal apparatus; a handover target selecting section that selects another station, which is a handover target of the communication terminal apparatus, based on the received quality information; a switching determining section that determines whether or not to perform path switching for performing switching so that the data transmitted from a higher station to the communication apparatus is transmitted from the higher station to the another station before handover based on the type of the data transmitted to the communication terminal apparatus; and a switching requesting section that requests, when the switching determining section determines to perform the path switching, the switching from the higher station.

The handover method of the present invention includes the steps of: acquiring at a handover source host received quality information, which is information of received quality in a communication terminal apparatus; selecting a handover target host of the communication terminal apparatus based on the received quality information; transmitting from the handover source host data type information, which is information of a type of data transmitted to the communication terminal apparatus, to the handover target host; determining at the handover target host whether or not to perform path switching for performing switching so that the data transmitted from a higher station to the handover source host is transmitted from the higher station to the handover target host before handover based on the data type information; requesting at the handover target host, when the path switching is determined to be performed, the switching from the higher station; temporarily storing at the handover target host the data transmitted from the higher station before handover in response to the request; and transmitting from the handover target host the stored data from the handover target host to the communication terminal apparatus after handover.

The handover method according to the present invention includes the steps of: acquiring at a handover source host received quality information, which is information of received quality in a communication terminal apparatus; selecting a handover target host of the communication terminal apparatus based on the received quality information; determining at the handover source host whether or not to perform path switching for performing switching so that the data transmitted from a higher station to the handover source host is transmitted from the higher station to the handover target host before handover based on a type of data transmitted to the communication terminal apparatus; requesting at the handover source host, when the path switching is determined to be performed, the switching from the higher station; temporarily storing at the handover target host the data transmitted from the higher station before handover in response to the request; and transmitting from the handover target host the stored data from the handover target host to the communication terminal apparatus after handover. Advantageous Effect of the Invention

The present invention performs handover according to traffic types, and can thereby prevent loss of packet data in non-real-time type communication and perform handover at high speed without producing any delay in real-time type communication.

### Brief Description of Drawings

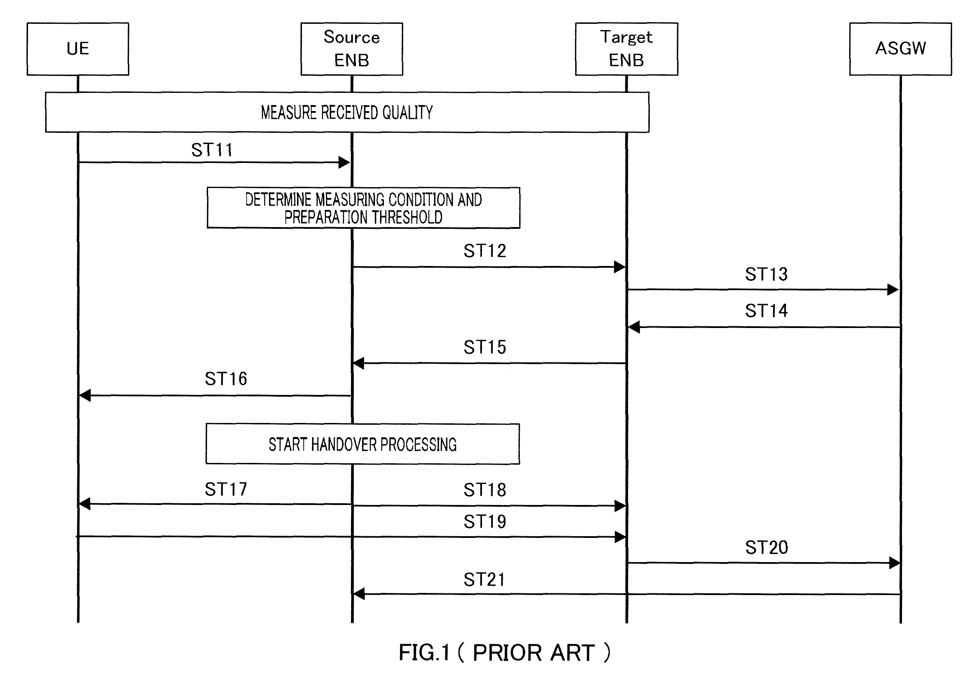

FIG. 1 is a sequence diagram showing a conventional handover method;
FIG.2 is a block diagram showing the configuration of a communication apparatus according to Embodiment 1 of the present invention;
FIG.3 is a block diagram showing the configuration of the handover controlling section according to Embodiment 1 of the present invention;
FIG.4 is a block diagram showing the configuration of the handover controlling section according to Embodiment 1 of the present invention;
FIG.5 shows the system configuration according to Embodiment 1 of the present invention;
FIG. 6 is a sequence diagram showing a handover method according to Embodiment 1 of the present invention;
FIG.7 is a sequence diagram showing the handover method according to Embodiment 1 of the present invention;
FIG.8 is a block diagram showing the configuration of a handover controlling section according to Embodiment 2 of the present invention;
FIG.9 is a sequence diagram showing a handover method according to Embodiment 2 of the present invention; and
FIG.10 is a sequence diagram showing the handover method according to Embodiment 2 of the present invention.

### Best Mode for Carrying Out the Invention

Hereinafter, embodiments of the present invention will be explained in detail below with reference to the accompanying drawings.

(Embodiment 1)

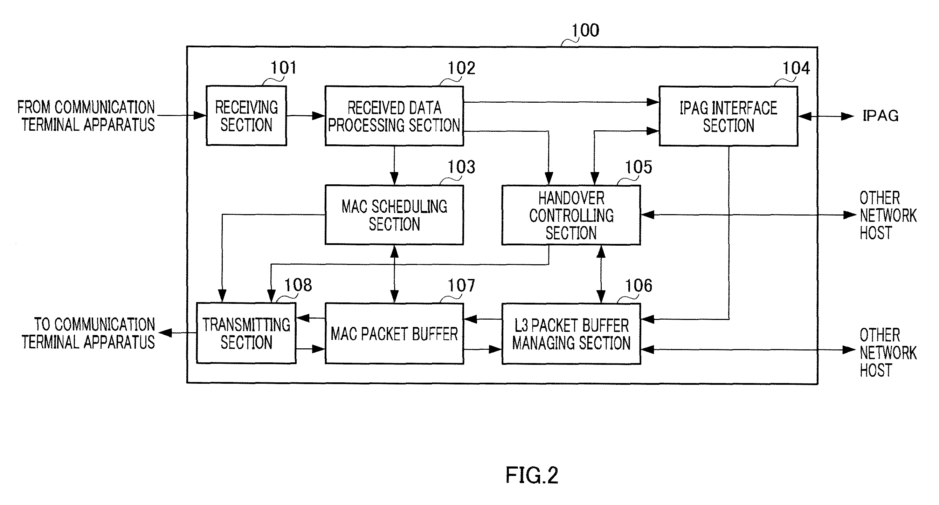

FIG.2 is a block diagram showing the configuration of network host 100 which is a communication apparatus according to Embodiment 1 of the present invention.

Receiving section 101 receives a signal transmitted from a communication terminal apparatus using a radio channel, down-converts the received signal from radio frequency to baseband frequency and outputs the received signal to received data processing section 102.

Received data processing section 102 demodulates the received signal inputted from receiving section 101 and decomposes the received signal into a data part and a control data part. Received data processing section 102 then outputs the decomposed data part to IP Access Gateway (hereinafter "IPAG") interface section 104 and also outputs the decomposed control data part to MAC scheduling section 103 and handover controlling section 105.

MAC scheduling section 103 performs scheduling based on received quality information, which is information of received quality in the communication terminal apparatus included in the control data part inputted from received data processing section 102, and queue information, which is information of the amount of data stored in MAC packet buffer 107 inputted from MAC packet buffer 107. For example, MAC scheduling section 103 holds a table storing scheduling information which associates received quality such as CQI (Channel Quality Indicator) with the amount of transmission data. MAC scheduling section 103 then refers to the scheduling information using received quality in received quality information such as the CQI inputted from received data processing section 102, also refers to the queue information and thereby selects an amount of transmission data. Furthermore, MAC scheduling section 103 controls transmitting section 108 so as to transmit only the selected amount of transmission data.

IPAG interface section 104 is connected to the IPAG by means of a cable and transmits the data part inputted from received data processing section 102 to the IPAG. Furthermore, IPAG interface section 104 outputs the data part received from the IPAG to L3 packet buffer managing section 106. Furthermore, IPAG interface section 104 transmits a switching request message, which is a message for requesting path switching for switching a path switch, inputted from handover controlling section 105 to the IPAG and also outputs a switching authorization message reporting that a request for switching the path switch received from the IPAG has been authorized, to handover controlling section 105.

Handover controlling section 105 performs processing which differs depending on whether network host 100 is a handover source or a handover target.

A case where network host 100 is a handover source will be explained first. In this case, handover controlling section 105 selects a handover target network host based on received quality information of a plurality of network hosts included in the control data part inputted from received data processing section 102. Furthermore, handover controlling section 105 transmits traffic type (QoS) information including data type information included in the control data part inputted from received data processing section 102, to the selected network host. Furthermore, handover controlling section 105 is not only controlling L3 packet buffer managing section 106 but also monitoring the amount of data stored in L3 packet buffer managing section 106. Furthermore, in the case of real-time type communication and upon receiving a message that preparations for handover are completed from the handover target network host, handover controlling section 105 calculates a possible transmission rate from the received quality information inputted from received data processing section 102 and estimates the time to complete the transmission of the data remaining in L3 packet buffer managing section 106 using the amount of data remaining in L3 packet buffer managing section 106 and the calculated transmission rate. Handover controlling section 105 then outputs information of the estimated time to transmitting section 108. The present invention is not limited to the case where data type information is extracted from packet data and transmitted, but may search data type information stored in network host 100 using an identifier of the packet data and transmit the searched data type information.

Here, the data type information is information corresponding to the data type such as an allowable delay time of data and a packet loss rate of data. Furthermore, depending on the allowable delay time or the like, the data type can be divided into four classes; a conversational class, a streaming class, an interactive class and a background. Of these classes, the conversational class and the streaming class are of a real-time type, and the interactive class and the background are of a non-real-time type. Examples of application in the respective classes include "voice" for the conversational class, "streaming video" for the streaming class, "web browsing" for the interactive class and "background download of emails" for the background.

Next, a case where the network host is a handover target will be explained. In this case, upon receiving a report from a network host of the handover source that the network host is a handover target, handover controlling section 105 decides whether or not the data type information included in the traffic type (QoS) information received from the network host of the handover source is data in real-time type communication. In the case of data in real-time type communication, handover controlling section 105 outputs a switching request message, which is a request for switching the path switch to the network host, to IPAG interface section 104. Furthermore, in the case of data in non-real-time type communication, handover controlling section 105 outputs no switching request message. Details of the configuration of handover controlling section 105 will be described later.

L3 packet buffer managing section 106, which is a data storing section, assembles the data inputted from IPAG interface section 104 into packet data of a layer 3 size based on the control of handover controlling section 105 and temporarily stores the packet data. Furthermore, L3 packet buffer managing section 106 temporarily stores the data transferred from the network host of the handover source before handover. L3 packet buffer managing section 106 then outputs the packet data stored at a predetermined timing, to MAC packet buffer 107 and inputs Ack/Nack information from MAC packet buffer 107 as to whether or not the communication terminal apparatus has received the packet data correctly. More specifically, when Nack information is inputted from MAC packet buffer 107, L3 packet buffer managing section 106 outputs the packet data outputted last time again, and, when Ack information is inputted from MAC packet buffer 107, L3 packet buffer managing section 106 outputs new packet data. Furthermore, L3 packet buffer managing section 106 of handover target network host 100 manages the sequence of packet data transferred from handover source network host 100 and the packet data transmitted from the IPAG after handover and outputs the packet data to MAC packet buffer 107 according to the sequence of the stored packet data.

MAC packet buffer 107 outputs queue information to MAC scheduling section 103. Furthermore, MAC packet buffer 107 reassembles the packet data inputted from L3 packet buffer managing section 106 into predetermined packet data and outputs the amount of packet data specified from transmitting section 108 to transmitting section 108 at a predetermined timing.

Transmitting section 108 commands MAC packet buffer 107 to output the amount of data specified from MAC scheduling section 103 and transmits the specified amount of packet data inputted from MAC packet buffer 107 using a radio signal.

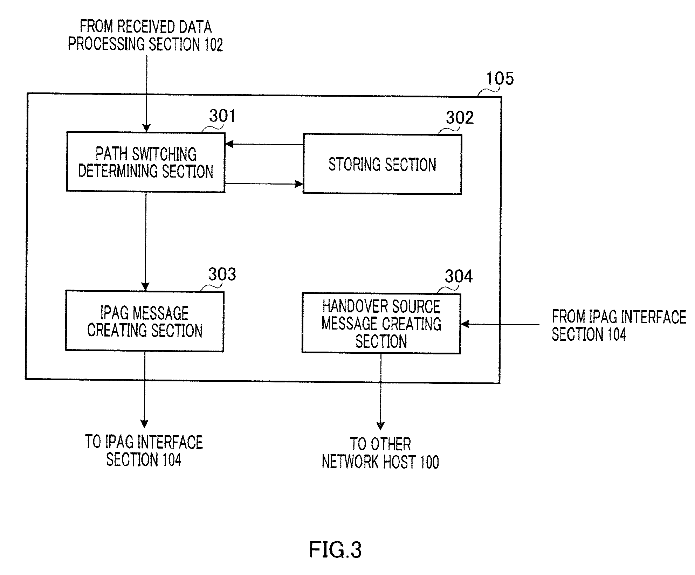

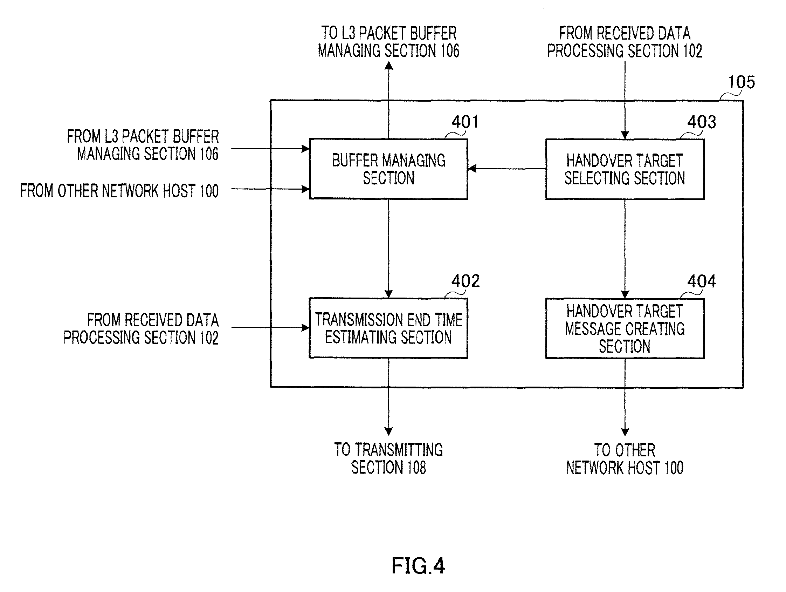

Next, details of the configuration of handover controlling section 105 will be explained using FIG.3 and FIG.4. FIG.3 is a block diagram showing the configuration of handover controlling section 105 when the network host is a handover target, and FIG.4 is a block diagram showing the configuration of handover controlling section 105 when the network host is a handover source. Handover controlling section 105 of network host 100 has both configurations in FIG.3 and FIG.4, which will be explained separately for convenience of explanation.

First, the configuration of handover controlling section 105 when the network host is a handover target will be explained using FIG.3.

When traffic (QoS) information is inputted from received data processing section 102, path switching determining section 301, which is a switching determining section, selects whether the transmission data is of a real-time type or non-real-time type, using the data type information included in the inputted traffic (QoS) information, with reference to path switching decision information which associates the data types stored in storing section 302 with a real-time type or non-real-time type. When the transmission data is of a real-time type, path switching determining section 301 commands IPAG message creating section 303 to create a message for securing resources and a switching request message. On the other hand, when the transmission data is of a non-real-time type, path switching determining section 301 commands IPAG message creating section 303 to create only a message for securing resources.

Storing section 302 stores the path switching decision information.

When commanded from path switching determining section 301 to create a message for securing resources and a switching request message, IPAG message creating section 303, which is a switching requesting section, creates a message for securing resources and a switching request message, and outputs the messages to IPAG interface section 104. Furthermore, when commanded from path switching determining section 301 to create only a message for securing resources, IPAG message creating section 303 creates only a message for securing resources, and outputs the message to IPAG interface section 104.

Upon receiving a message for authorizing switching of the path switch from IPAG interface section 104 as input, handover source message creating section 304 creates a message reporting that preparations for handover have been completed, and transmits the message to another handover source network host.

Next, the configuration of handover controlling section 105 when the network host is a handover source will be explained using FIG.4.

Buffer managing section 401 outputs a control signal for performing control to L3 packet buffer managing section 106. Furthermore, upon receiving a message that preparations for handover have been completed from the handover target network host as input, buffer managing section 401 outputs information of the amount of data stored in L3 packet buffer managing section 106 inputted from L3 packet buffer managing section 106, to transmission end time estimating section 402.

Transmission end time estimating section 402 calculates the transmission rate at which data can be transmitted with received quality in the received quality information inputted from received data processing section 102, and estimates the time to complete the transmission of all the data remaining in L3 packet buffer managing section 106 without being transmitted, based on the calculated transmission rate and information of the amount of data stored in L3 packet buffer managing section 106 inputted from buffer managing section 401. Transmission end time estimating section 402 then outputs information of the estimated time to transmitting section 108.

Handover target selecting section 403 selects the handover target network host based on the received quality information of each network host inputted from received data processing section 102. For example, handover target selecting section 403 selects the network host having the received quality information showing the best received quality as the handover target. Handover target selecting section 403 then commands handover target message creating section 404 to create a message for reporting to the network host selected as the handover target that the network host has been selected as the handover target.

Upon receiving the command from handover target selecting section 403 to create a message for reporting that the network host has been selected as the handover target, handover target message creating section 404 creates a message for reporting that the network host has been selected as the handover target, and transmits the message to another handover target network host.

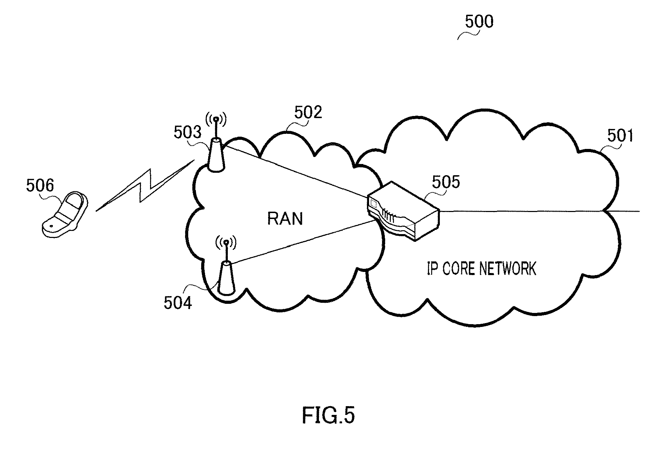

Fig. 5 shows the configuration of network 500 according to Embodiment 1. Network 500 is configured with IP-based core network 501 and Radio Access Network (RAN) 502. Network hosts 503 and 504 are located on RAN 502 and connected to IPAG 505 by cables. IPAG 505 is located on IP core network 501 and plays the role as a gateway for external network. Communication terminal apparatus 506 establishes connection with network host 503 using a radio access technique and communicates with external network via IPAG 505.

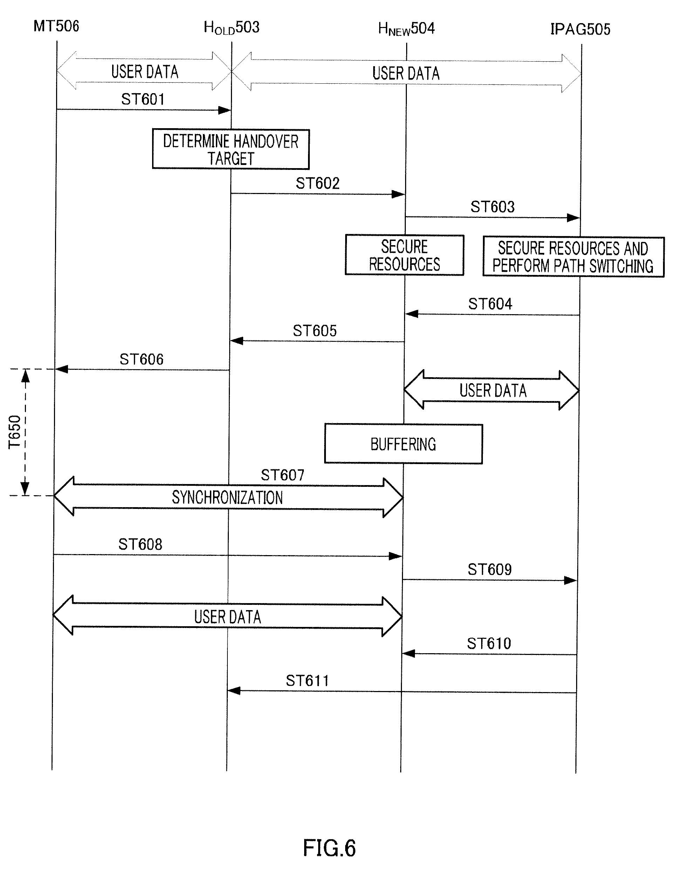

Next, the handover method on network 500 will be explained using FIG.6. FIG.6 is a sequence diagram showing a handover method. In FIG.6 and in the explanation of FIG.6, communication terminal apparatus 506 is described as "MT," handover source network host 503 is described as "H_{OLD}" and handover target network host 504 is described as "H_{NEW}" for convenience of explanation. Furthermore, H_{OLD} 503 and H_{NEW} 504 have the same configuration as that in FIG.2.

First, the operation in a case where MT 506 performs handover to H_{NEW} 504 while MT 506 is connected to H_{OLD} 503 and communicating real-time type application with external network will be explained. In FIG.6, suppose MT 506 is communicating with the external network via H_{OLD} 503 and IPAG 505.

First, MT 506 reports received quality, that is, quality of a cell which will be a candidate of the handover target to H_{OLD} 503 so that the network host can determine an appropriate target cell for handover (measurement report) (step ST601).

Next, handover controlling section 105 of H_{OLD} 503 determines H_{NEW} 504, which is the appropriate handover target, based on resources of each cell, processing load and received quality in the received quality information of the plurality of cells reported in step ST601 (handover decision).

Next, handover controlling section 105 of H_{OLD} 503 transfers the UE context including information showing the traffic type of a session subject to handover, to selected H_{NEW} 504 (context transfer) (step ST602).

Next, H_{NEW} 504 sends a resource reservation request to IPAG 505 to secure resources for MT 506 in IPAG 505. Furthermore, in this case, handover controlling section 105 of H_{NEW} 504 decides that the data type is a real-time type and also includes information showing a path switch request in the resource reservation request. (step ST603).

Next, H_{NEW} 504 secures resources for MT 506 (resource allocation).

Next, IPAG 505 secures resources for MT 506 and changes the destination address from H_{OLD} 503 to H_{NEW} 504 and thereby executes path switching (resource allocation and path switching).

Next, IPAG 505 sends a resource reservation acknowledgement message for reporting to H_{NEW} 504 that resources have been secured for MT 506 (step ST604). In this case, IPAG 505 includes information (a path switch reply) showing the completion of path switching in the resource reservation acknowledgement message.

Next, when H_{NEW} 504 succeeds in reserving necessary resources for MT 506 and H_{NEW} 504 receives the resource reservation acknowledgement message from IPAG 505, H_{NEW} 504 reports to H_{OLD} 503 that preparations for handover have been completed (a context transfer response) (step ST605).

Next, H_{OLD} 503 commands MT 506 to move to the target cell and sends cell-specific parameters necessary for communication to H_{NEW} 504 through the target cell (an RB reconfigurationmessage) (step ST606). In this case, H_{OLD} 503 specifies the time to complete the transmission of packet data remaining in L3 packet buffer managing section 106 estimated by handover controlling section 105, that is, the timing at which MT 506 starts handover to the target cell, in an activation timer based on the amount of remaining packets directed to MT 506 stored in L3 packet buffer managing section 106 of the handover source network host and the transmission rate of the packet data. This allows H_{OLD} 503 to make adjustments so that packets directed to MT 506 do not remain in L3 packet buffer managing section 106 of H_{OLD} 503 as much as possible. By specifying the timing at which handover is started in the activation timer, MT 506 does not perform handover until time T650 elapses after receiving cell-specific parameters in step ST606. MT 506 then cuts off connection with H_{OLD} 503 when time T650 has elapsed after receiving the RB reconfiguration message in step ST606. Therefore, H_{OLD} 503 can transmit packets remaining in L3 packet buffer managing section 106 to MT 506 during time T650. This eliminates the necessity for H_{OLD} 503 to transfer packet data to H_{NEW} 504. However, time T650 is the time estimated by H_{OLD} 503, and therefore there may also be a case where the transmission of the packet data is not completed within time T650. However, influences of loss of the packet data are relatively small in real-time type communication, and therefore there is no problem even if some packet data does not arrive at the communication terminal apparatus.

Next, H_{NEW} 504 buffers the packets directed to MT 506 transferred from IPAG 505 in L3 packet buffer managing section 106 until a radio link is established between MT 506 and H_{NEW} 504 (data buffering).

Next, MT 506 is synchronized with H_{NEW} 504 (radio L1. & L2 establishment) (step ST607).
This causes MT 506 to establish connection with H_{NEW} 504.

Next, MT 506 reports to H_{NEW} 504 that handover to H_{NEW} 504 has been completed (an RB reconfiguration complete message) (step ST608). Upon receiving the RB reconfiguration complete message from MT 506, H_{NEW} 504 starts to send packets directed to MT 506 buffered in L3 packet buffer managing section 106.

Next, H_{NEW} 504 reports to IPAG 505 that handover of MT 506 has been completed (a handover complete message) (step ST609).

Next, IPAG 505 sends a message in reply to the handover complete message to H_{NEW} 504 (a handover complete acknowledgement message) (step ST610).

Next, IPAG 505 which has received the handover complete message in step ST609 recognizes that handover of MT 506 has completed and starts to release H_{OLD} 503 (resource release) (step ST611).

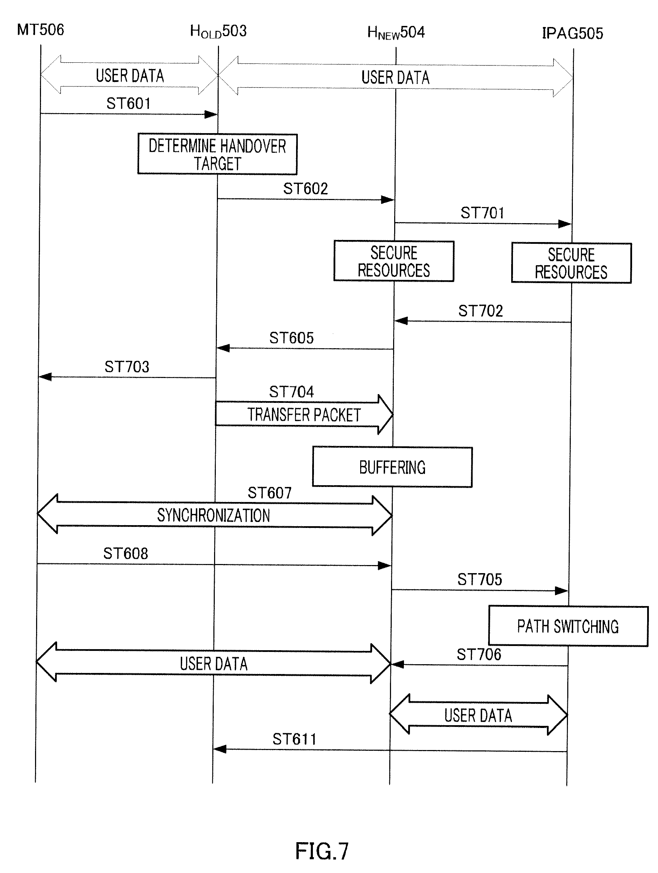

Next, the operation when MT 506 performs handover to H_{NEW} 504 while MT 506 is connected to H_{OLD} 503 and communicating non-real-time type application with external network will be explained using FIG.7. FIG. 7 is a sequence diagram showing a handover method. Here, the same operations as those in FIG. 6 are assigned the same reference numerals and explanations thereof will be omitted.

Handover controlling section 105 of H_{OLD} 503 transfers UE context including information showing the traffic type of a session subject to handover, to selected H_{NEW} 504 (context transfer) (step ST602).

Next, H_{NEW} 504 sends a resource reservation request to secure resources for MT 506 in IPAG 505 to IPAG 505 (step ST701). In this case, handover controlling section 105 of H_{NEW} 504 decides that the data type is a non-real-time type and does not include information showing a path switch request in the resource reservation request.

Next, H_{NEW} 504 secures resources for MT 506 (resource allocation).

Next, IPAG 505 secures resources of MT 506 (resource allocation).

Next, IPAG 505 sends a resource reservation acknowledgement message reporting that resources for MT 506 have been secured to H_{NEW} 504 (step ST702). In this case, IPAG 505 does not include information (a path switch reply) showing the completion of path switching in the resource reservation acknowledgement message.

Next, when H_{NEW} 504 succeeds in reserving necessary resources for MT 506 and H_{NEW} 504 receives the resource reservation acknowledgement message from IPAG 505, H_{NEW} 504 reports to H_{OLD} 503 that preparations for handover have been completed (a context transfer response) (step ST605).

Next, H_{OLD} 503 commands MT 506 to move to the target cell and sends cell-specific parameters necessary for communication to H_{NEW} 504 via the target cell (an RB reconfigurationmessage) (step ST703). In this case, H_{OLD} 503 does specify the timing at which MT 506 starts handover to the target cell in the activation timer.

Next, H_{OLD} 503 which has received the context transfer response showing the completion of handover preparations from H_{NEW} 504 copies the packet data directed to MT 506 remaining in L3 packet buffer managing section 106 and transfers the copy to H_{NEW} 504 (data forwarding) (step ST704). This ensures that packet data that H_{OLD} 503 has not been successfully transmitted to MT 506 are transmitted to MT 506.

Next, H_{NEW} 504 buffers packets directed to MT 506 transferred from H_{OLD} 503 in L3 packet buffer managing section 106 until a radio link is established between MT 506 and H_{NEW} 504 (data buffering).

Next, MT 506 shows H_{NEW} 504 that the handover to H_{NEW} 504 has been completed (an RB reconfiguration complete message) (step ST608).

Next, H_{NEW} 504 reports to IPAG 505 that the handover of MT 506 has been completed (a handover complete message) (step ST705). Furthermore, in this case, handover controlling section 105 of H_{NEW} 504 decides that the data type is a non-real-time type and also includes information showing a path switch request in the handover complete message, which is a message requesting path switching.

Next, IPAG 505 changes the destination address from H_{OLD} 503 to H_{NEW} 504 and thereby executes path switching (path switching).

Next, IPAG 505 sends a message in reply to the handover complete message to H_{NEW} 504 (a handover complete acknowledgement message) (step ST706). In this case, IPAG 505 includes information (a path switch reply) showing the completion of path switching in the handover complete acknowledgement message.

Next, IPAG 505 which has received the handover complete message in step ST705 recognizes that the handover of MT 506 has been completed and starts to release H_{OLD} 503 (resource release) (step ST611).

Next, H_{NEW} 504 which has received the RB reconfiguration complete message from MT 506 starts to send the packet data buffered in L3 packet buffer managing section 106 and transferred from H_{OLD} 503, and the packet data directed to MT 506 received from IPAG 505, according to the sequence of packet data.

Thus, when carrying out real-time type communication, this Embodiment 1 switches the path switch before cutting off the connection with the handover source network host, and thereby sends packet data to the handover target network host, so that handover can be performed at high speed without producing any delay. Furthermore, when carrying out real-time type communication, this Embodiment 1 estimates the time to complete the transmission of packet data remaining in the handover source network host, prevents the communication terminal apparatus from performing handover for the estimated time, transmits the packet data remaining in the handover source network host to the communication terminal apparatus during the estimated time, and thereby eliminates the necessity for transferring packet data from the handover source network host to the handover target network host, so that handover can be performed at high speed without producing any delay. Furthermore, in the case of non-real-time type communication, this Embodiment 1 transfers packet data remaining in the handover source to the handover target network host as in the case of the conventional art, so that it is possible to prevent loss of packet data.

(Embodiment 2)

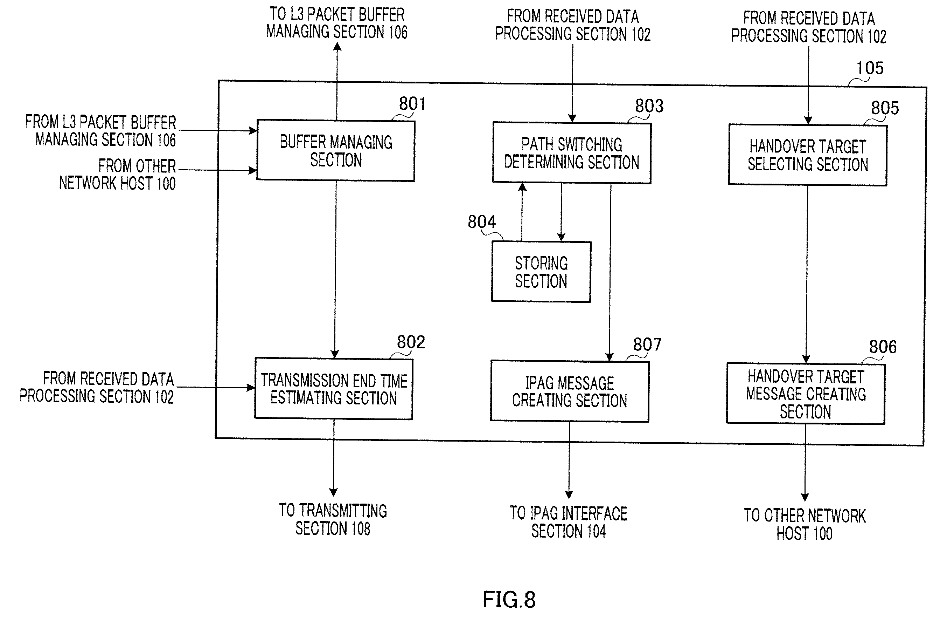

FIG. 8 is a block diagram showing the configuration of handover controlling section 105 according to Embodiment 2 of the present invention. The configuration of the network host in this Embodiment 2 is the same as the configuration in FIG.2, and therefore explanations thereof will be omitted.

Buffer managing section 801 outputs a control signal for performing control to L3 packet buffer managing section 106. Furthermore, upon receiving a message showing that preparations for handover have been completed from the handover target network host as input, buffer managing section 801 outputs information of the amount of data stored in L3 packet buffer managing section 106 inputted from L3 packet buffer managing section 106 to transmission end time estimating section 802.

Transmission end time estimating section 802 calculates a transmission rate at which data can be transmitted with received quality in the received quality information inputted from received data processing section 102, and estimates the time to complete the transmission of all data remaining in L3 packet buffer managing section 106 without being transmitted, based on the calculated transmission rate and information of the amount of data stored in L3 packet buffer managing section 106 inputted from buffer managing section 801. Transmission end time estimating section 802 then outputs information of the estimated time to transmitting section 108.

Upon receiving traffic (QoS) information from received data processing section 102, path switching determining section 803 selects whether the transmission data is of a real-time type or a non-real-time type, using the data type information included in the inputted traffic (QoS) information, with reference to path switching decision information which associates the data type stored in storing section 804 with the real-time type or non-real-time type. When the transmission data is of a real-time type, path switching determining section 803 commands IPAG message creating section 807 to create a switching request message which is a message for requesting path switching and a message for securing resources. On the other hand, when the transmission data is of a non-real-time type, path switching determining section 803 commands IPAG message creating section 807 to create only a message for securing resources.

Storing section 804 stores path switching decision information.

Handover target selecting section 805 selects the handover target network host based on received quality information of each network host inputted from received data processing section 102. For example, handover target selecting section 805 selects a network host having received quality information of the best received quality as the handover target. Handover target selecting section 805 then commands handover target message creating section 806 to create a message to report to the network host selected as the handover target that the network host has been selected as the handover target.

When commanded from handover target selecting section 805 to create a message reporting that the network host has been selected as the handover target, handover target message creating section 806, which is a reporting section, creates a message reporting that the network host has been selected as the handover target and transmits the message to another handover target network host.

When commanded from path switching determining section 803 to create a message for securing resources and a switching request message, IPAG message creating section 807 creates a message for securing resources and a switching request message and outputs the messages to IPAG interface section 104. Furthermore, when commanded from path switching determining section 803 to create only a message for securing resources, IPAG message creating section 807 creates only a message for securing resources and outputs the message to IPAG interface section 104.

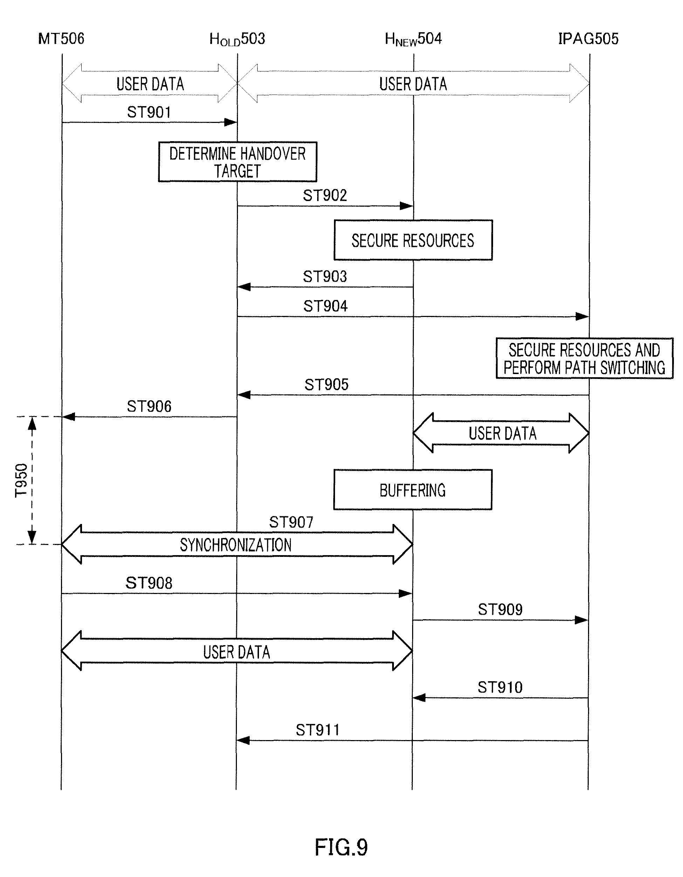

Next, the handover method on network 500 will be explained using FIG.9. FIG.9 is a sequence diagram showing the handover method. In FIG.9 and in the explanation of FIG.9, suppose communication terminal apparatus 506 is described as "MT," handover source network host 503 is described as "H_{OLD}" and handover target network host 504 is described as H_{NEW} for convenience of explanation. Furthermore, H_{OLD} 503 and H_{NEW} 504 have the same configurations as those in FIG.2.

First, the operation when MT 506 performs handover to H_{NEW} 504 while MT 506 is connected to H_{OLD} 503 and is communicating real-time type application with external network will be explained. In FIG.9, suppose MT 506 is communicating with the external network via H_{OLD} 503 and IPAG 505.

First, MT 506 reports the quality of a cell which becomes a handover target candidate to H_{OLD} 503 so that the network host can determine an appropriate target cell for handover (measurement report) (step ST901).

Next, handover controlling section 105 of H_{OLD} 503 determines H_{NEW} 504, which is an appropriate handover target, based on resources of each cell, processing load and received quality in received quality information of a plurality of cells reported in step ST901 (handover decision).

Next, H_{OLD} 503 sends UE context to H_{NEW} 504 (context transfer) (step ST902).

Next, H_{NEW} 504 secures resources for MT 506 (resource allocation).

Next, when H_{NEW} 504 succeeds in reserving necessary resources for MT 506, H_{NEW} 504 reports to H_{OLD} 503 that preparations for handover have been completed (a context transfer response) (step ST903).

Next, H_{OLD} 503 sends a resource reservation request to IPAG 505 to secure resources for MT 506 in IPAG 505. Furthermore, in this case, handover controlling section 105 of H_{OLD} 503 decides that the data type is a real-time type and also includes information showing a path switch request, which is a message for requesting path switching, in the resource reservation request. (step ST904).

Next, IPAG 505 secures resources of MT 506, changes the destination address from H_{OLD} 503 to H_{NEW} 504 and thereby executes path switching (resource allocation and path switching).

Next, IPAG 505 sends a resource reservation acknowledgement message reporting to H_{OLD} 503 that resources of MT 506 have been secured (step ST905). In this case, IPAG 505 includes information (a path switch reply) showing the completion of path switching in the resource reservation acknowledgement message.

next, H_{OLD} 503 commands MT 506 to move to the target cell and sends cell-specific parameters necessary for communication to H_{NEW} 504 via the target cell (an RB reconfiguration message) (step ST906). In this case, H_{OLD} 503 specifies the time to complete the transmission of packet data remaining in L3 packet buffer managing section 106 estimated by handover controlling section 105, that is, a timing at which MT 506 starts handover to the target cell in the activation timer based on the amount of remaining packets directed to MT 506 stored in L3 packet buffer managing section 106 of the network host and the transmission rate of the packet data. This allows H_{OLD} 503 to make adjustments so that packets directed to MT 506 do not remain in L3 packet buffer managing section 106 of H_{OLD} 503 as much as possible. By specifying the timing for starting handover in the activation timer, MT 506 does not perform handover until time T950 elapses after receiving cell-specific parameters in step ST906. MT 506 then cuts off the connection with H_{OLD} 503 after a lapse of time T950 after receiving the RB reconfiguration message in step ST906. Therefore, H_{OLD} 503 can send packets remaining in L3 packet buffer managing section 106 to MT 506 during time T950. This eliminates the necessity for H_{OLD} 503 to transfer packet data to H_{NEW} 504. However, time T950 is the time estimated by H_{OLD} 503, and therefore there may also be a case where the transmission of the packet data is not completed within time T950. However, influences from loss of packet data are relatively small in real-time type communication, and therefore there is no problem even if some packet data does not arrive at the communication terminal apparatus.

Next, H_{NEW} 504 buffers packets directed to MT 506 transferred from IPAG 505 in L3 packet buffer managing section 106 until a radio link is established between MT 506 and H_{NEW} 504 (Data Buffering).

Next, MT 506 synchronizes with H_{NEVV} 504 (radio L1. & L2 establishment) (step ST907). This causes MT 506 to establish connection with H_{NEW} 504.

Next, MT 506 shows H_{NEW} 504 that handover to H_{NEW} 504 has been completed (an RB reconfiguration complete message) (step ST908). H_{NEW} 504 which has received the RB reconfiguration complete message from MT 506 starts to transmit the packets directed to MT 506 buffered in L3 packet buffer managing section 106.

Next, H_{NEW} 504 reports to IPAG 505 that the handover of MT 506 has been completed (a handover complete message) (step ST909).

Next, IPAG 505 sends a message in reply to the handover complete message to H_{NEW} 504 (a handover complete acknowledgement message) (step ST910).

Next, IPAG 505 which has received the handover complete message in step ST609 recognizes that the handover of MT 506 has been completed and starts to release H_{OLD} 503 (resource release) (step ST911).

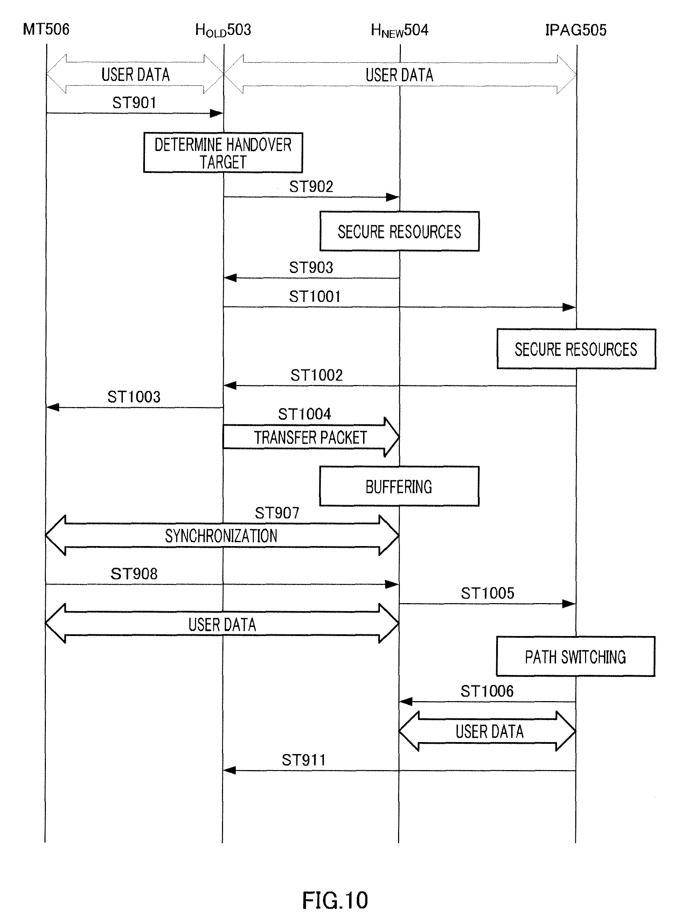

Next, the operation when MT 506 performs handover to H_{NEW} 504 while MT 506 is connected to H_{OLD} 503 and is communicating non-real-time type application with external network will be explained using FIG.7. FIG.10 is a sequence diagram showing a handover method. The same operations as those in FIG.9 will be assigned the same reference numerals and explanations thereof will be omitted.

When H_{NEW} 504 succeeds in reserving necessary resources for MT 506, H_{NEW} 504 reports to H_{OLD} 503 that preparations for handover have been completed (a context transfer response) (step ST903).

Next, H_{OLD} 503 sends a resource reservation request to IPAG 505 to secure resources for MT 506 in IPAG 505 (step ST1001). In this case, handover controlling section 105 of H_{NEW} 503 decides that the data type is a non-real-time type and does not include information showing a path switch request in the resource reservation request.

Next, IPAG 505 secures resources of MT 506 (resource allocation).

Next, IPAG 505 sends a resource reservation acknowledgement message reporting to H_{OLD} 503 that resources for MT 506 have been secured (step ST1002). In this case, IPAG 505 does not include information (a path switch reply) showing the completion of path switching in the resource reservation acknowledgement message.

Next, H_{OLD} 503 commands MT 506 to move to the target cell and sends cell-specific parameters necessary for communication to H_{NEW} 504 via the target cell (an RB reconfiguration message) (step ST1003). In this case, H_{OLD} 503 does not specify a timing at which MT 506 performs handover to the target cell in the activation timer.

Next, H_{OLD} 503 copies packet data directed to MT 506 remaining in L3 packet buffer managing section 106 and transfers the copy (data forwarding) (step ST1004). This ensures that the packet data which has not been transmitted by H_{OLD} 503 to MT 506, is transmitted to MT 506.

Next, H_{NEW} 504 buffers the packet directed to MT 506 transferred from H_{OLD} 503 in L3 packet buffer managing section 106 until a radio link is established between MT 506 and K_{NEW} 504 (data buffering).

Next, MT 506 shows H_{NEW} 504 that handover to H_{NEW} 504 has been completed (an RB reconfiguration complete message) (step ST908).

Next, H_{NEW} 504 reports to IPAG 505 that handover of MT 506 has been completed (a handover complete message) (step ST1005). Furthermore, in this case, handover controlling section 105 of H_{NEW} 504 decides that the data type is a non-real-time type and also includes information showing a path switch request in the handover complete message.

Next, IPAG 505 changes the destination address from H_{OLD} 503 to H_{NEW} 504 and thereby executes path switching (path switching).

Next, IPAG 505 sends a message in reply to the handover complete message to H_{NEW} 504 (a handover complete acknowledgement message) (step ST1006). In this case, IPAG 505 includes information (a path switch reply) showing the completion of path switching in the handover complete acknowledgement message.

Next, in step ST1005, IPAG 505 which has received the handover complete message recognizes that the handover of MT 506 has been completed and starts to release H_{OLD} 503 (resource release) (step ST911).

Next, H_{NEW} 504 which has received the RB reconfiguration complete message from MT 506 starts to send the packet data buffered in L3 packet buffer managing section 106 and transferred from H_{OLD} 503 and the packet data directed to MT 506 received from IPAG 505 according to the sequence of packet data.

In this way, when carrying out real-time type communication, this Embodiment 2 switches a path switch before cutting off the connection with the handover source network host, and thereby sends packet data to the handover target network host, so that handover can be performed at high speed without producing any delay. Furthermore, when carrying out real-time type communication, this Embodiment 2 estimates the time to complete the transmission of packet data remaining in the handover source network host, prevents the communication terminal apparatus from performing handover during the estimated time, sends the packet data remaining in the handover source network host to the communication terminal apparatus during the estimated time, and thereby eliminates the necessity for the handover source network host to transfer packet data to the handover target network host, so that handover can be performed at high speed without producing any delay. Furthermore, when carrying out non-real-time type communication, as in the conventional art, this Embodiment 2 transfers packet data remaining in the handover source to the handover target network host, so that it is possible to prevent loss of the packet data. Industrial Applicability

The communication apparatus and handover method according to the present invention are suitable for use in performing handover according to traffic types in particular.

## Claims

1. A communication apparatus comprising:
a data type information acquiring section that acquires, when the communication apparatus is selected as a handover target of a communication terminal apparatus, data type information, which is information of a type of data transmitted to the communication terminal apparatus by another station of a handover source;
a switching determining section that determines whether or not to perform path switching for switching the data being transmitted from a higher station to the another station so as to be transmitted from the higher station to the communication apparatus before handover based on the data type information;
a switching requesting section that requests, when the switching determining section determines to perform the path switching, the switching from the higher station;
a data storing section that temporarily stores the data transmitted from the higher station in response to the request of the switching requesting section; and
a transmitting section that transmits the data stored in the data storing section to the communication terminal apparatus after the handover.

2. The communication apparatus according to claim 1, wherein the data storing section stores the data transferred from the another station when the request is not sent and before handover, manages a sequence of the data transmitted from the higher station after handover and the data transferred and stored, and stores the data, and
the transmitting section transmits the data stored in the data storing section through the transfer and the data transmitted from the higher station and stored in the data storing section, to the communication terminal apparatus.

3. A communication apparatus comprising:
a received quality information acquiring section that acquires received quality information, which is information of received quality in a communication terminal apparatus;
a handover target selecting section that selects another station, which is a handover target of the communication terminal apparatus, based on the received quality information;
a switching determining section that determines whether or not to perform path switching for performing switching so that the data transmitted from a higher station to the communication apparatus is transmitted from the higher station to the another station before handover based on the type of the data transmitted to the communication terminal apparatus; and
a switching requesting section that requests, when the switching determining section determines to perform the path switching, the switching from the higher station.

4. The communication apparatus according to claim 3, further comprising:
a data storing section that temporarily stores the data transmitted from the higher station and stops, when the path switching is determined to be performed, storage of the data before handover; and
a transmitting section that transfers, when the path switching is determined not to be performed, the data stored in the data storing section to the another station, and transmits, when the path switching is determined to be performed, the data remaining in the data storing section after the stop, to the communication terminal apparatus before handover.

5. The communication apparatus according to claim 4, further comprising a transmission end time estimating section that estimates a time to complete the transmission of the data remaining in the data storing section after the stop to the communication terminal apparatus,
wherein the transmitting section transmits, when the path switching is determined to be performed, information of the time to the communication terminal apparatus, and transmits the data remaining in the data storing section to the communication terminal apparatus within the time before handover.

6. A handover method comprising the steps of:
acquiring at a handover source host received quality information, which is information of received quality in a communication terminal apparatus;
selecting a handover target host of the communication terminal apparatus based on the received quality information;
transmitting from the handover source host data type information, which is information of a type of data transmitted to the communication terminal apparatus, to the handover target host;
determining at the handover target host whether or not to perform path switching for performing switching so that the data transmitted from a higher station to the handover source host is transmitted from the higher station to the handover target host before handover based on the data type information;
requesting at the handover target host, when the path switching is determined to be performed, the switching from the higher station;
temporarily storing at the handover target host the data transmitted from the higher station before handover in response to the request; and
transmitting from the handover target host the stored data from the handover target host to the communication terminal apparatus after handover.

7. A handover method comprising the steps of:
acquiring at a handover source host received quality information, which is information of received quality in a communication terminal apparatus;
selecting a handover target host of the communication terminal apparatus based on the received quality information;
determining at the handover source host whether or not to perform path switching for performing switching so that the data transmitted from a higher station to the handover source host is transmitted from the higher station to the handover target host before handover based on a type of data transmitted to the communication terminal apparatus;
requesting at the handover source host, when the path switching is determined to be performed, the switching from the higher station;
temporarily storing at the handover target host the data transmitted from the higher station before handover in response to the request; and
transmitting from the handover target host the stored data from the handover target host to the communication terminal apparatus after handover.
